# EUROPEAN PATENT SPECIFICATION

(11) **EP 4 527 604 B1**
(45) Date of publication and mention of the grant of the patent: **18.03.2026**
(21) Application number: 24191510.7
(22) Date of filing: 29.07.2024
(51) Int. Cl.: B29C 73/16

(54) **MIXING DEVICE, BOTTLE UNIT, AND PUNCTURE REPAIR KIT**
MISCHVORRICHTUNG, FLASCHENEINHEIT UND PUNKTIONSREPARATURKIT
DISPOSITIF DE MÉLANGE, UNITÉ DE BOUTEILLE ET KIT DE RÉPARATION DE CREVAISON

(30) Priority: 25.09.2023 JP 2023161553
(43) Date of publication of application: 26.03.2025
(73) Proprietor: SUMITOMO RUBBER INDUSTRIES, LTD., Kobe-shi, Hyogo 651-0072 (JP)
(72) Inventor: NOMURA, Keisuke, Hyogo, 651-0072 (JP); MAKI, Takashi, Hyogo, 651-0072 (JP)
(74) Representative: Forresters IP LLP

(56) References cited:
- WO-A1-2022/214433
- DE-A1- 102018 219 038
- DE-C- 652 764
- NL-B1- 2 029 588

## Description

### BACKGROUND OF THE INVENTION

### Field of the Invention

The present disclosure relates to a mixing device for mixing a puncture repair liquid and compressed air, a bottle unit including the mixing device, and a puncture repair kit including the bottle unit.

### Background Art

Hitherto, a puncture repair kit for repairing an object such as a punctured tire has been known. For example, Japanese Laid-Open Patent Publication No. 2017-056662 proposes a puncture repair kit for repairing a punctured object by sequentially injecting a puncture repair liquid and compressed air into the punctured object using compressed air from a compressor.

However, with the puncture repair kit of Japanese Laid-Open Patent Publication No. 2017-056662, the puncture repair liquid and the compressed air are sequentially injected into the punctured object, and thus the time required for puncture repair tends to be longer, so that there is a demand for further improvement in terms of efficiency of puncture repair. Further prior art arrangements are known from WO 2022/214433, DE 652754 and NL 2029588.

DE 10 2018 219038 A1 discloses a bottle unit according to the preamble of claim 1.

The present invention has been made in view of the above circumstances, and a main object of the present invention is to provide a mixing device, a bottle unit, and a puncture repair kit that allow a punctured object to be efficiently repaired.

### SUMMARY OF THE INVENTION

The present invention provides a bottle unit as defined by the claims. Further provided is a puncture repair kit as defined by the claims.

The present invention allows a punctured object to be efficiently repaired.

### BRIEF DESCRIPTION OF THE DRAWINGS

FIG. 1 is a cross-sectional view showing one embodiment of a puncture repair kit of the present invention;
FIG. 2 is a plan view of a mixing device;
FIG. 3 is a plan view of a mixing device of a second embodiment;
FIG. 4 is a partial cross-sectional perspective view of a mixing device of a third embodiment;
FIG. 5 is a plan view of a mixing device of a fourth embodiment; and
FIG. 6 is a plan view of a mixing device of a fifth embodiment.

### DETAILED DESCRIPTION

Hereinafter, an embodiment of the present invention will be described in detail with reference to the drawings.

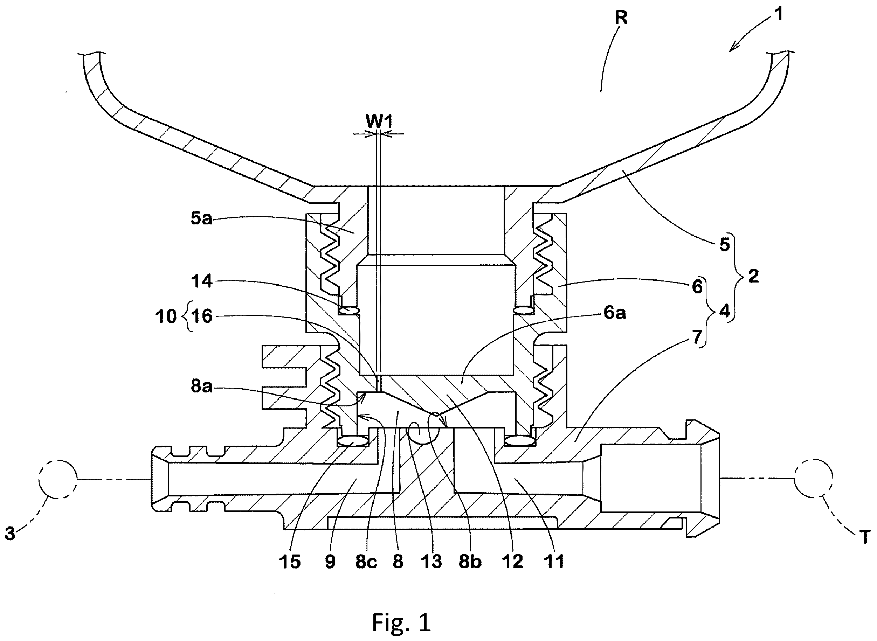

FIG. 1 is a cross-sectional view showing a puncture repair kit 1 of the present embodiment. As shown in FIG. 1, the puncture repair kit 1 is suitably used, for example, for filling an object T, such as a punctured tire, with a puncture repair liquid R and compressed air A.

The puncture repair kit 1 of the present embodiment includes a bottle unit 2 for discharging a mixture of the puncture repair liquid R and the compressed air A to the object T, and a compressor 3 for supplying the compressed air A. The bottle unit 2 of the present embodiment includes a mixing device 4 for mixing the puncture repair liquid R and the compressed air A, and a container 5 for containing the puncture repair liquid R. The mixing device 4 includes, for example, an adapter member 6 attached to the container 5 and a cap member 7 attached to the adapter member 6.

In such a bottle unit 2, it is easy to attach the mixing device 4 and the container 5 to each other, so that the bottle unit 2 serves to shorten the time required for puncture repair. In addition, the mixing device 4 can mix the puncture repair liquid R and the compressed air A in advance before filling the object T, thereby shortening the time required for puncture repair. The mixing device 4 is not limited to such a mode, and may be, for example, an integrally molded product in which the adapter member 6 and the cap member 7 are integrated.

The container 5 has a mouth portion 5a for containing the puncture repair liquid R inside the container 5. The container 5 contains the puncture repair liquid R therein, for example, through the mouth portion 5a. The mouth portion 5a has, for example, a film (not shown) for holding the contained puncture repair liquid R in an airtight manner.

The mixing device 4 is attached to the mouth portion 5a of the container 5. Such a container 5 eliminates the need to form a separate outlet for the puncture repair liquid R and serves to reduce the production cost.

The mixing device 4 of the present embodiment includes a mixing chamber 8 having a space for mixing the puncture repair liquid R and the compressed air A. The mixing chamber 8 includes, for example, a top surface 8a which is located on an upper side when in use in which the mixing device 4 is attached to the container 5 and puncture repair is performed, a floor surface 8b which is located on a lower side when in use, and a side surface 8c connecting the top surface 8a and the floor surface 8b. The mixing chamber 8 has, for example, a space having a circular column shape in which the top surface 8a and the floor surface 8b are circular.

The mixing device 4 of the present embodiment includes a first inlet 9 for supplying the compressed air A to the mixing chamber 8, and a second inlet 10 for supplying the puncture repair liquid R to the mixing chamber 8. The first inlet 9 communicates, for example, with the compressor 3 which is a compressed air source. The second inlet 10 communicates, for example, with the container 5 containing the puncture repair liquid R.

In such a mixing device 4, the mixing chamber 8 can be repeatedly brought into a positive pressure state and a negative pressure state by pulsation of the compressed air A supplied from the compressor 3, thereby dripping the puncture repair liquid R in the container 5 from the second inlet 10 into the mixing chamber 8 to produce a mixture.

The mixing device 4 preferably includes an outlet 11 for discharging the mixture of the puncture repair liquid R and the compressed air A from the mixing chamber 8. Such a mixing device 4 allows the mixture of the puncture repair liquid R and the compressed air A to be supplied to the object T, so that the time required for puncture repair can be reduced as compared to the case of sequentially supplying the puncture repair liquid R and the compressed air A.

The first inlet 9 and the outlet 11 are provided, for example, in the cap member 7. The first inlet 9 and the outlet 11 of the present embodiment are provided in the floor surface 8b. The second inlet 10 is provided, for example, in a separation wall 6a of the adapter member 6. The second inlet 10 of the present embodiment is provided in the top surface 8a.

Such a mixing device 4 discharges the mixture of the compressed air A and the puncture repair liquid R dripped from the second inlet 10 located on the upper side, through the outlet 11 located on the lower side, and thus can inhibit the dripped puncture repair liquid R from remaining therein, thereby efficiently producing the mixture.

The mixing chamber 8 may include, for example, a protrusion portion 12 which protrudes from the top surface 8a toward the interior of the mixing chamber 8. For example, a conical shape having a most protruding vertex is suitably adopted for the protrusion portion 12. Such a protrusion portion 12 can provide directivity to the flow inside the mixing chamber 8, and thus serves to efficiently discharge the mixture of the puncture repair liquid R and the compressed air A.

The mixing chamber 8 may have, for example, a plurality of hemispherical recesses 13 formed on at least one of the top surface 8a, the floor surface 8b, and the side surface 8c. Such a plurality of recesses 13 serve to make the flow smooth and shorten the residence time of the mixture in the mixing chamber 8.

The adapter member 6 is screwed to both the mouth portion 5a of the container 5 and the cap member 7, for example. The space between the adapter member 6 and the mouth portion 5a is preferably sealed by a sealing member 14. The space between the adapter member 6 and the cap member 7 is sealed, for example, by a sub sealing member 15. Such an adapter member 6 is easily attached to the container 5 and to the cap member 7, and has excellent airtightness after being attached.

The adapter member 6 may have, for example, a breaking portion (not shown) for breaking a film (not shown) of the mouth portion 5a when screwed to the mouth portion 5a.

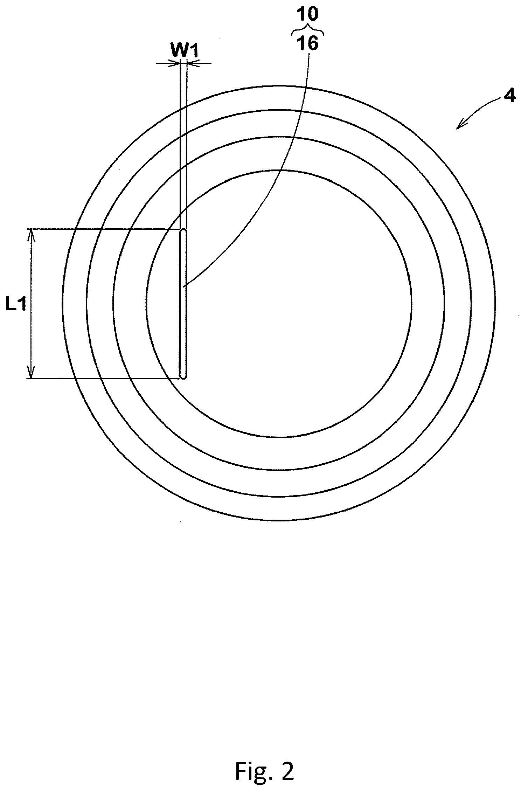

FIG. 2 is a plan view of the mixing device 4. As shown in FIG. 1 and FIG. 2, the second inlet 10 includes at least one slit-like flow path 16 having a traverse cross-section having a longitudinal direction, in the present embodiment, one flow path 16. Such a second inlet 10 can inhibit the flow path 16 from being clogged even if the puncture repair liquid R in the container 5 contains rubber lumps, which are solids, thereby allowing the puncture repair liquid R to be efficiently supplied.

The second inlet 10 of the present embodiment allows the puncture repair liquid R to be supplied from the slit-like flow path 16 even when the viscosity of the puncture repair liquid R increases under low temperature conditions, thereby allowing the puncture repair liquid R to be supplied as a mixture to the object T. Therefore, the mixing device 4 of the present embodiment allows the punctured object T to be efficiently repaired.

As a more preferable mode, a length L1 in the longitudinal direction of the slit-like flow path 16 is preferably 3.0 to 15.0 mm. When the length L1 of the flow path 16 is 3.0 mm or more, clogging of the flow path 16 by rubber lumps can be assuredly suppressed. When the length L1 of the flow path 16 is 15.0 mm or less, excessive supply of the puncture repair liquid R which may cause clogging at the outlet 11 can be suppressed. Here, the length L1 of the flow path 16 is the shortest length along the longitudinal direction.

A width W1 in a direction orthogonal to the longitudinal direction of the slit-like flow path 16 is preferably 0.3 to 1.0 mm. When the width W1 of the flow path 16 is 0.3 mm or more, processing is easy, so that such a flow path 16 serves to reduce the production cost. When the width W1 of the flow path 16 is 1.0 mm or less, excessive supply of the puncture repair liquid R which may cause clogging at the outlet 11 can be suppressed. Here, the width W1 of the flow path 16 is the shortest width in the direction orthogonal to the longitudinal direction.

The slit-like flow path 16 of the present embodiment extends with a constant flow path cross-sectional area over the entire region thereof. It is easy to process such a flow path 16, so that the production cost can be reduced, and it is also easy to adjust the supply amount of the puncture repair liquid R.

The flow path 16 of the present embodiment is a slit in which the longitudinal direction extends linearly. It is easy to process such a flow path 16, so that the production cost can be reduced.

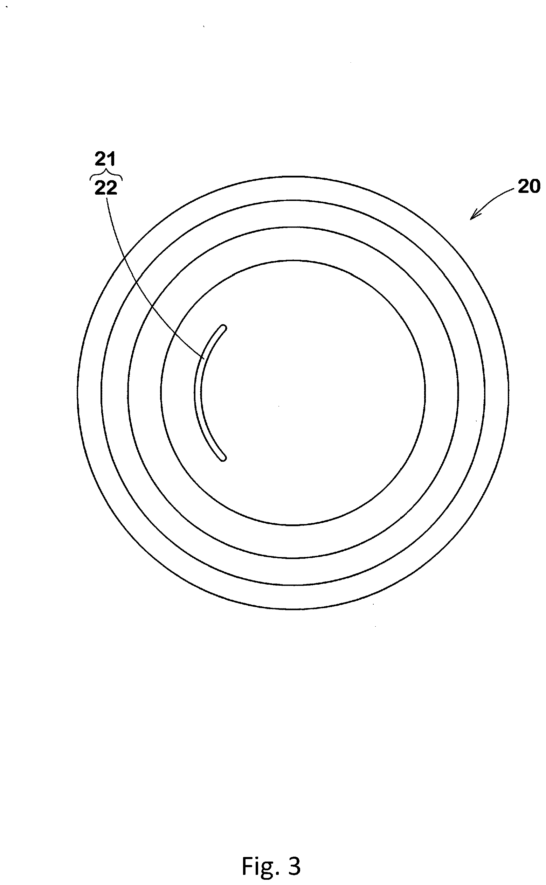

FIG. 3 is a plan view of a mixing device 20 of a second embodiment. The same components as those in the above-described embodiment are designated by the same reference characters, and the description thereof is omitted. As shown in FIG. 3, similar to the above-described mixing device 4, the mixing device 20 of the second embodiment includes a second inlet 21 for supplying the puncture repair liquid R to the mixing chamber 8 (shown in FIG. 1).

Similar to the above-described second inlet 10, the second inlet 21 of the second embodiment includes one slit-like flow path 22 having a transverse cross-section having a longitudinal direction. Such a second inlet 21 can inhibit the flow path 22 from being clogged even if the puncture repair liquid R in the container 5 (shown in FIG. 1) contains rubber lumps, which are solids, thereby allowing the puncture repair liquid R to be efficiently supplied.

Similar to the above-described second inlet 10, the second inlet 21 of the second embodiment allows the puncture repair liquid R to be supplied from the slit-like flow path 22 even when the viscosity of the puncture repair liquid R increases under low temperature conditions, thereby allowing the puncture repair liquid R to be supplied as a mixture to the object T.

The flow path 22 may be, for example, a slit in which the longitudinal direction extends in a curved or bent shape. The flow path 22 of the second embodiment is a slit in which the longitudinal direction extends in an arc shape. Such a flow path 22 allows the puncture repair liquid R to be supplied to the vicinity of the side surface 8c (shown in FIG. 1) of the mixing chamber 8, resulting in excellent dispersibility of the puncture repair liquid R in the mixing chamber 8, and serves to efficiently produce the mixture.

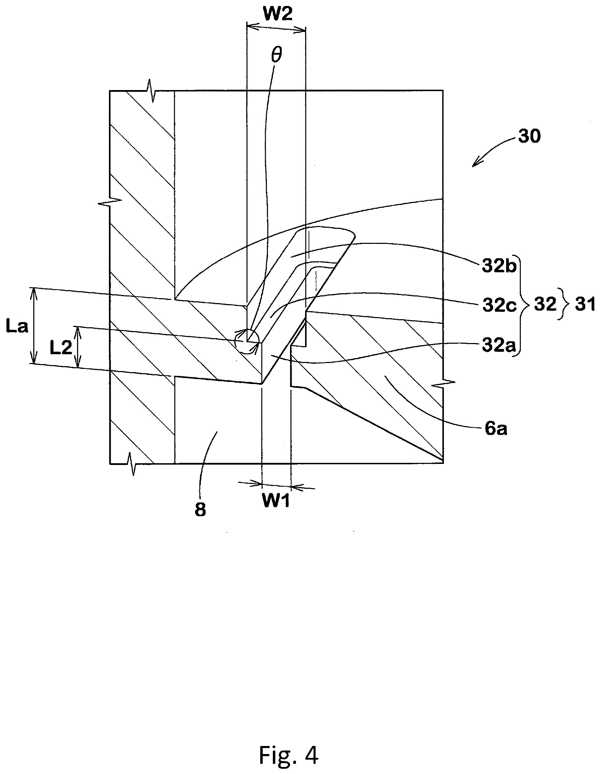

FIG. 4 is a partial cross-sectional perspective view of a mixing device 30 of a third embodiment. The same components as those in the above-described embodiments are designated by the same reference characters, and the description thereof is omitted. As shown in FIG. 4, similar to the above-described mixing device 4, the mixing device 30 of the third embodiment includes a second inlet 31 for supplying the puncture repair liquid R to the mixing chamber 8.

Similar to the above-described second inlet 10, the second inlet 31 of the third embodiment includes one slit-like flow path 32 having a transverse cross-section having a longitudinal direction. Such a second inlet 31 can inhibit the flow path 32 from being clogged even if the puncture repair liquid R in the container 5 (shown in FIG. 1) contains rubber lumps, which are solids, thereby allowing the puncture repair liquid R to be efficiently supplied.

Similar to the above-described second inlet 10, the second inlet 31 of the third embodiment allows the puncture repair liquid R to be supplied from the slit-like flow path 32 even when the viscosity of the puncture repair liquid R increases under low temperature conditions, thereby allowing the puncture repair liquid R to be supplied as a mixture to the object T.

The flow path 32 of the third embodiment includes a first portion 32a which is open at the mixing chamber 8 with a first flow path cross-sectional area S1, and a second portion 32b which is above the first portion 32a and has a second flow path cross-sectional area S2 larger than the first flow path cross-sectional area S1. The flow path 32 preferably includes a step portion 32c which is between the first portion 32a and the second portion 32b and discontinuously changes a flow path cross-sectional area thereof.

Such a flow path 32 can reduce the flow rate of the puncture repair liquid R by causing a pressure loss in the flow path 32, thereby making the supply of the puncture repair liquid R gentle. Accordingly, the second inlet 31 can optimize the supply amount of the puncture repair liquid R to the mixing chamber 8 per unit time, thereby inhibiting the puncture repair liquid R from being excessively supplied to the mixing chamber 8 and inhibiting the dripped puncture repair liquid R from remaining.

The first portion 32a of the third embodiment extends with the first flow path cross-sectional area S1 being constant. The second portion 32b preferably extends with the second flow path cross-sectional area S2 being constant. It is easy to process such a second inlet 31, so that the production cost can be reduced.

The second flow path cross-sectional area S2 is preferably 150% to 300% of the first flow path cross-sectional area S1. When the second flow path cross-sectional area S2 is 150% or more of the first flow path cross-sectional area S1, a pressure loss can be assuredly caused in the flow path 32. When the second flow path cross-sectional area S2 is 300% or less of the first flow path cross-sectional area S1, the puncture repair liquid R can be inhibited from remaining at the step portion 32c, thereby allowing the puncture repair liquid R to be efficiently supplied. From such a viewpoint, the second flow path cross-sectional area S2 is more preferably 180% to 200% of the first flow path cross-sectional area S1.

An angle θ between the outer circumferential surface of the second portion 32b and a step surface of the step portion 32c is preferably 30 to 140°. When the angle θ between the second portion 32b and the step portion 32c is 30° or more, the flow rate of the puncture repair liquid R can be reduced while the puncture repair liquid R is inhibited from remaining at the step portion 32c. When the angle θ between the second portion 32b and the step portion 32c is 140° or less, a pressure loss can be assuredly caused in the flow path 32. From such a viewpoint, the angle θ between the second portion 32b and the step portion 32c is more preferably 45 to 100°.

A flow path length L2 of the first portion 32a is preferably 10% to 70% of a total length La of the flow path 32. When the flow path length L2 of the first portion 32a is 10% or more of the total length La of the flow path 32, a pressure loss can be caused in the first portion 32a, so that the flow rate of the puncture repair liquid R at the first portion 32a can be reduced. When the flow path length L2 of the first portion 32a is 70% or less of the total length La of the flow path 32, a pressure loss can be assuredly caused at the step portion 32c. From such a viewpoint, the flow path length L2 of the first portion 32a is more preferably 20% to 40% of the total length La of the flow path 32.

The flow path 32 may include, for example, a third portion (not shown), upstream of the second portion 32b, which has a flow path cross-sectional area larger than the second flow path cross-sectional area S2, and the flow path cross-sectional area thereof may change in more steps. In addition, in the mixing device 30, for example, a second separation wall (not shown) may be provided upstream of the separation wall 6a to form the second inlet 31 with multiple steps.

The flow path 32 of the third embodiment is a slit in which the longitudinal direction extends linearly. It is easy to process such a flow path 32, so that the production cost can be reduced.

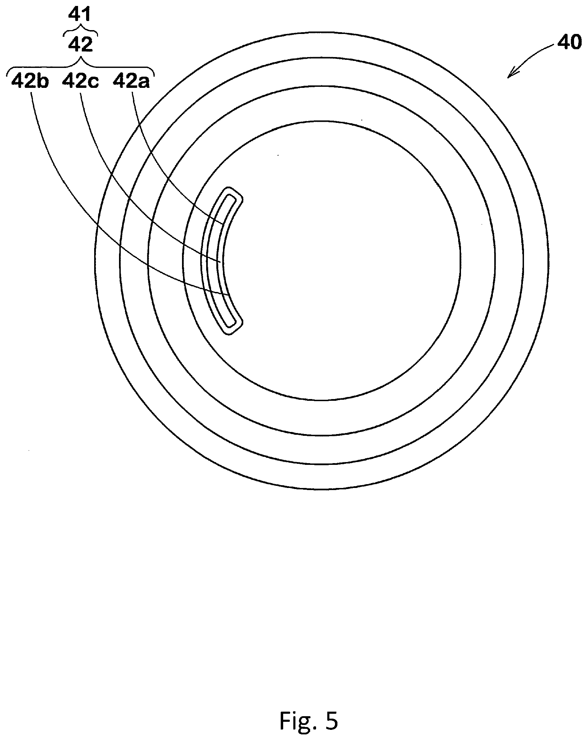

FIG. 5 is a plan view of a mixing device 40 of the fourth embodiment. The same components as those in the above-described embodiments are designated by the same reference characters, and the description thereof is omitted. As shown in FIG. 5, similar to the above-described mixing device 30, the mixing device 40 of the fourth embodiment includes a second inlet 41 for supplying the puncture repair liquid R to the mixing chamber 8 (shown in FIG. 4).

Similar to the above-described second inlet 31, the second inlet 41 of the fourth embodiment includes one slit-like flow path 42 having a transverse cross-section having a longitudinal direction. Such a second inlet 41 can inhibit the flow path 42 from being clogged even if the puncture repair liquid R in the container 5 (shown in FIG. 1) contains rubber lumps, which are solids, thereby allowing the puncture repair liquid R to be efficiently supplied.

Similar to the above-described second inlet 31, the second inlet 41 of the fourth embodiment allows the puncture repair liquid R to be supplied from the slit-like flow path 42 even when the viscosity of the puncture repair liquid R increases under low temperature conditions, thereby allowing the puncture repair liquid R to be supplied as a mixture to the object T.

Similar to the above-described flow path 32, the flow path 42 of the fourth embodiment includes a first portion 42a which is open at the mixing chamber 8 (shown in FIG. 4) with a first flow path cross-sectional area S1, and a second portion 42b which is above the first portion 42a and has a second flow path cross-sectional area S2 larger than the first flow path cross-sectional area S1. Similar to the above-described flow path 32, the flow path 42 preferably includes a step portion 42c which is between the first portion 42a and the second portion 42b and discontinuously changes a flow path cross-sectional area thereof.

Such a flow path 42 can reduce the flow rate of the puncture repair liquid R by causing a pressure loss in the flow path 42, thereby making the supply of the puncture repair liquid R gentle. Accordingly, the second inlet 41 can optimize the supply amount of the puncture repair liquid R to the mixing chamber 8 per unit time, thereby inhibiting the puncture repair liquid R from being excessively supplied to the mixing chamber 8 and inhibiting the dripped puncture repair liquid R from remaining.

Similar to the above-described flow path 22, the flow path 42 is, for example, a slit in which the longitudinal direction extends in a curved or bent shape. The flow path 42 of the fourth embodiment is a slit in which the longitudinal direction extends in an arc shape. Such a flow path 42 allows the puncture repair liquid R to be supplied to the vicinity of the side surface 8c (shown in FIG. 1) of the mixing chamber 8, resulting in excellent dispersibility of the puncture repair liquid R in the mixing chamber 8, and serves to efficiently produce the mixture.

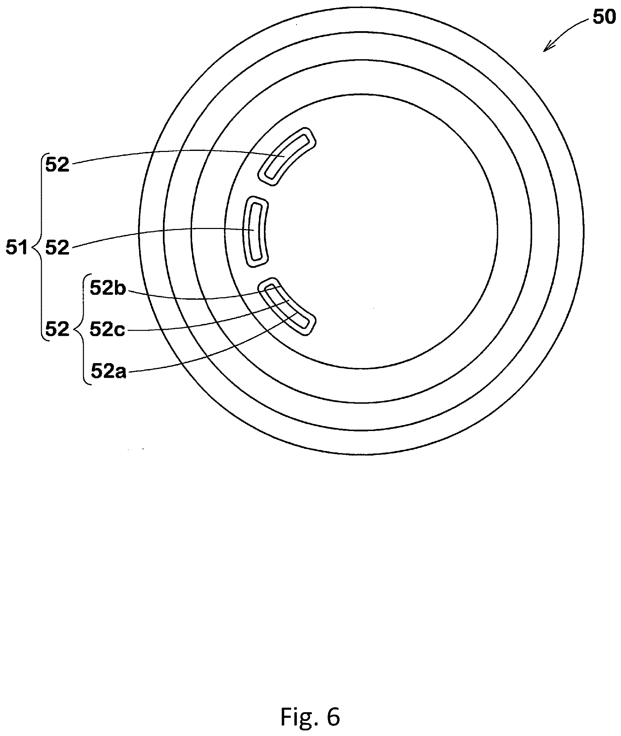

FIG. 6 is a plan view of a mixing device 50 of a fifth embodiment. The same components as those in the above-described embodiments are designated by the same reference characters, and the description thereof is omitted. As shown in FIG. 6, similar to the above-described mixing device 30, the mixing device 50 of the fifth embodiment includes a second inlet 51 for supplying the puncture repair liquid R to the mixing chamber 8 (shown in FIG. 4).

The second inlet 51 includes at least one slit-like flow path 52 having a transverse cross-section having a longitudinal direction, in the fifth embodiment, three flow paths 52. Such a second inlet 51 can inhibit the flow paths 52 from being clogged even if the puncture repair liquid R in the container 5 (shown in FIG. 1) contains rubber lumps, which are solids, thereby allowing the puncture repair liquid R to be efficiently supplied.

Similar to the above-described second inlet 31, the second inlet 51 of the fifth embodiment allows the puncture repair liquid R to be supplied from the slit-like flow paths 52 even when the viscosity of the puncture repair liquid R increases under low temperature conditions, thereby allowing the puncture repair liquid R to be supplied as a mixture to the object T.

Similar to the above-described flow path 32, each flow path 52 of the fifth embodiment includes a first portion 52a which is open at the mixing chamber 8 (shown in FIG. 4) with a first flow path cross-sectional area S1, and a second portion 52b which is above the first portion 52a and has a second flow path cross-sectional area S2 larger than the first flow path cross-sectional area S1. Similar to the above-described flow path 32, each flow path 52 preferably includes a step portion 52c which is between the first portion 52a and the second portion 52b and discontinuously changes a flow path cross-sectional area thereof.

Such a flow path 52 can reduce the flow rate of the puncture repair liquid R by causing a pressure loss in the flow path 52, thereby making the supply of the puncture repair liquid R gentle. Accordingly, the second inlet 51 can optimize the supply amount of the puncture repair liquid R to the mixing chamber 8 per unit time, thereby inhibiting the puncture repair liquid R from being excessively supplied to the mixing chamber 8 and inhibiting the dripped puncture repair liquid R from remaining.

Similar to the above-described flow path 42, each flow path 52 is, for example, a slit in which the longitudinal direction extends in an arc shape. Such a flow path 52 allows the puncture repair liquid R to be supplied to the vicinity of the side surface 8c (shown in FIG. 1) of the mixing chamber 8, resulting in excellent dispersibility of the puncture repair liquid R in the mixing chamber 8, and serves to efficiently produce the mixture.

Each flow path 52 may be, for example, a slit in which the longitudinal direction extends linearly. In this case, the second inlet 51 may be formed, for example, as a whole in an arc shape such that the respective flow paths 52 are arranged at a certain distance from the side surface 8c of the mixing chamber 8, or may be formed as a whole in a linear shape such that the respective flow paths 52 are aligned in a straight line.

Although the particularly preferred embodiments of the present invention have been described in detail above, the present invention is not limited to the above-described embodiments, and various modifications can be made to implement the present invention.

### EXAMPLES

Mixing devices having the basic structure shown in FIG. 1 to FIG. 3 and FIG. 5 were produced as test mixing devices on the basis of specifications in Table 1. As comparative examples, mixing devices each having a second inlet formed by three round holes were produced as test mixing devices. Using the produced test mixing devices, the presence or absence of clogging of the flow path when puncture repair was performed five times in a normal temperature environment of 20 to 30°C and the presence or absence of clogging of the flow path when puncture repair was performed five times in a low temperature environment of -10°C were tested.

The results are indicated by "Presence" if clogging of the flow path occurred even in one of the five tests and supply of the puncture repair liquid was not possible, and by "Absence" if no clogging of the flow path occurred in all five tests and supply of the puncture repair liquid was possible until the end. If no test was performed, the result is indicated by "-".

The results of the tests are shown in Table 1.

**[Table 1]**

| | Comp. Ex. 1 | Comp. Ex. 2 | Ex. 1 | Ex. 2 | Ex. 3 | Ex. 4 | Ex. 5 | Ex. 6 |
|---|---|---|---|---|---|---|---|---|
| Shape of flow path of second inlet | Round hole | Round hole | Linear slit | Linear slit | Linear slit | Arc-shaped slit | Arc-shaped slit | Arc-shaped slit |
| Minimum dimension of flow path (mm) (diameter φ or length L1×width W1) | φ1.4 | φ0.7 | 11.0 × 0.5 | 15.0 × 0.3 | 11.0 × 0.8 | 10.5 × 0.8 | 11.0 × 0.5 | 10.5 × 0.8 |
| Presence or absence of step portion | Absence | Absence | Absence | Absence | Absence | Presence | Absence | Absence |
| Presence or absence of clogging of flow path in normal temperature environment | Presence | Presence | Absence | Absence | - | Absence | Absence | - |
| Presence or absence of clogging of flow path in low temperature environment | Presence | Presence | - | - | Absence | - | - | Absence |

As a result of the tests, it is confirmed that in the mixing device of each Example, as compared to each Comparative Example, the puncture repair liquid can be used until the end without clogging of the flow path at both normal and low temperatures, thereby allowing a punctured object to be efficiently repaired.

## Claims

1. A bottle unit (2) comprising:
a mixing device (4, 20, 30, 40, 50) for mixing a puncture repair liquid (R) and compressed air (A), and
a container (5) containing the puncture repair liquid (R),
the container (5) has a mouth portion (5a) for containing the puncture repair liquid (R) inside the container (5), and
the mixing device (4) is attached to the mouth portion (5a),
the mixing device (4, 20, 30, 40, 50) comprising:
a mixing chamber (8) having a space for mixing the puncture repair liquid (R) and the compressed air (A);
a first inlet (9) for supplying the compressed air (A) to the mixing chamber (8);
a second inlet (10, 21) for supplying the puncture repair liquid (R) to the mixing chamber (8); and
an outlet (11) for discharging a mixture of the puncture repair liquid (R) and the compressed air (A) from the mixing chamber (8), **characterized in that**
the second inlet (10, 21) includes at least one slit-like flow path (16, 22, 32, 42, 52) having a transverse cross-section having a longitudinal direction.

2. The bottle unit (2) according to claim 1, wherein the flow path (16, 32, 52) is a slit in which the longitudinal direction extends linearly.

3. The bottle unit (2) according to claim 1, wherein the flow path (22, 42, 52) is a slit in which the longitudinal direction extends in a curved shape.

4. The bottle unit (2) according to claim 3, wherein the flow path (22, 42) is a slit in which the longitudinal direction extends in an arc shape.

5. The bottle unit (2) according to any one of claims 1 to 4, wherein
a length (L1) in the longitudinal direction of the flow path (16) is 3.0 to 15.0 mm, and
a width (W1) in a direction orthogonal to the longitudinal direction of the flow path (16) is 0.3 to 1.0 mm.

6. The bottle unit (2) according to any one of claims 1 to 5, wherein
the mixing chamber (8) includes a top surface (8a) which is located on an upper side when in use and a floor surface (8b) which is located on a lower side when in use, and
the second inlet (10) is provided in the top surface (8a).

7. The bottle unit (2) according to claim 6, wherein the flow path (32, 42, 52) includes a first portion (32a, 42a, 52a) which is open at the mixing chamber (8) with a first flow path cross-sectional area (S1), a second portion (32b, 42b, 52b) which is above the first portion (32a, 42a, 52a) and has a second flow path cross-sectional area (S2) larger than the first flow path cross-sectional area (S1), and a step portion (32c, 42c, 52c) which is between the first portion (32a, 42a, 52a) and the second portion (32b, 42b, 52b) and discontinuously changes a flow path cross-sectional area thereof.

8. The bottle unit (2) according to any one of claims 1 to 6, wherein the flow path (16) extends with a constant flow path cross-sectional area over an entire region thereof.

9. A puncture repair kit (1) comprising:
the bottle unit (2) according to any preceding claim; and
a compressor (3) for supplying the compressed air (A).

## Patentansprüche

1. Flascheneinheit (2), umfassend:
eine Mischvorrichtung (4, 20, 30, 40, 50) zum Mischen einer Reifenpannenreparaturflüssigkeit (R) und Druckluft (A), und
einen Behälter (5), der die Reifenpannenreparaturflüssigkeit (R) enthält,
wobei der Behälter (5) einen Öffnungsabschnitt (5a) zum Aufnehmen der Reifenpannenreparaturflüssigkeit (R) im Inneren des Behälters (5) aufweist, und
die Mischvorrichtung (4) an dem Öffnungsabschnitt (5a) angebracht ist,
wobei die Mischvorrichtung (4, 20, 30, 40, 50) umfasst:
eine Mischkammer (8), die einen Raum zum Mischen der Reifenpannenreparaturflüssigkeit (R) und der Druckluft (A) aufweist;
einen ersten Einlass (9) zum Zuführen der Druckluft (A) zu der Mischkammer (8);
einen zweiten Einlass (10, 21) zum Zuführen der Reifenpannenreparaturflüssigkeit (R) zu der Mischkammer (8); und
einen Auslass (11) zum Abführen eines Gemisches aus der Reifenpannenreparaturflüssigkeit (R) und der Druckluft (A) aus der Mischkammer (8), **dadurch gekennzeichnet, dass**
der zweite Einlass (10, 21) mindestens einen schlitzartigen Strömungsweg (16, 22, 32, 42, 52), der einen Querschnitt aufweist, der eine Längsrichtung aufweist, einschließt.

2. Flascheneinheit (2) nach Anspruch 1, wobei der Strömungsweg (16, 32, 52) ein Schlitz ist, in dem sich die Längsrichtung linear erstreckt.

3. Flascheneinheit (2) nach Anspruch 1, wobei der Strömungsweg (22, 42, 52) ein Schlitz ist, in dem sich die Längsrichtung in gekrümmter Form erstreckt.

4. Flascheneinheit (2) nach Anspruch 3, wobei der Strömungsweg (22, 42) ein Schlitz ist, in dem sich die Längsrichtung in Bogenform erstreckt.

5. Flascheneinheit (2) nach einem der Ansprüche 1 bis 4, wobei
eine Länge (L1) in der Längsrichtung des Strömungswegs (16) von 3,0 bis 15,0 mm beträgt, und
eine Breite (W1) in einer Richtung orthogonal zur Längsrichtung des Strömungswegs (16) von 0,3 bis 1,0 mm beträgt.

6. Flascheneinheit (2) nach einem der Ansprüche 1 bis 5, wobei
die Mischkammer (8) eine Oberseite (8a), die sich bei Gebrauch auf einer oberen Seite befindet, und eine Unterseite (8b), die sich bei Gebrauch auf einer unteren Seite befindet, einschließt, und
der zweite Einlass (10) in der Oberseite (8a) bereitgestellt ist.

7. Flascheneinheit (2) nach Anspruch 6, wobei der Strömungsweg (32, 42, 52) einen ersten Abschnitt (32a, 42a, 52a), der an der Mischkammer (8) mit einem ersten Strömungswegquerschnittsbereich (S1) offen ist, einen zweiten Abschnitt (32b, 42b, 52b), der oberhalb des ersten Abschnitts (32a, 42a, 52a) liegt und einen zweite Strömungswegquerschnittsbereich (S2) aufweist, der größer als der erste Strömungswegquerschnittsbereich (S1) ist, und einen Stufenabschnitt (32c, 42c, 52c), der zwischen dem ersten Abschnitt (32a, 42a, 52a) und dem zweiten Abschnitt (32b, 42b, 52b) liegt und einen Strömungswegquerschnittsbereich davon diskontinuierlich ändert, einschließt.

8. Flascheneinheit (2) nach einem der Ansprüche 1 bis 6, wobei sich der Strömungsweg (16) mit einem konstanten Strömungswegquerschnittsbereich über einer gesamten Region davon erstreckt.

9. Reifenpannenreparaturset (1), umfassend:
die Flascheneinheit (2) nach einem der vorstehenden Ansprüche; und
einen Kompressor (3) zum Zuführen der Druckluft (A).

## Revendications

1. Unité de bouteille (2) comprenant :
un dispositif de mélange (4, 20, 30, 40, 50) pour mélanger un liquide de réparation de crevaison (R) et de l'air comprimé (A), et
un récipient (5) contenant le liquide de réparation de crevaison (R),
le récipient (5) a une partie embouchure (5a) pour contenir le liquide de réparation de crevaison (R) à l'intérieur du récipient (5), et
le dispositif de mélange (4) est fixé à la partie embouchure (5a),
le dispositif de mélange (4, 20, 30, 40, 50) comprenant :
une chambre de mélange (8) ayant un espace pour mélanger le liquide de réparation de crevaison (R) et l'air comprimé (A) ;
une première entrée (9) pour alimenter l'air comprimé (A) à la chambre de mélange (8) ;
une seconde entrée (10, 21) pour alimenter la chambre de mélange (8) en liquide de réparation de crevaison (R) ; et
une sortie (11) pour évacuer un mélange du liquide de réparation de crevaison (R) et de l'air comprimé (A) depuis la chambre de mélange (8), **caractérisé en ce que**
la seconde entrée (10, 21) comporte au moins une voie d'écoulement en forme de fente (16, 22, 32, 42, 52) ayant une section transversale ayant une direction longitudinale.

2. Unité de bouteille (2) selon la revendication 1, dans laquelle le trajet d'écoulement (16, 32, 52) est une fente dans laquelle la direction longitudinale s'étend linéairement.

3. Unité de bouteille (2) selon la revendication 1, dans laquelle le trajet d'écoulement (22, 42, 52) est une fente dans laquelle la direction longitudinale s'étend sous une forme incurvée.

4. Unité de bouteille (2) selon la revendication 3, dans laquelle le trajet d'écoulement (22, 42) est une fente dans laquelle la direction longitudinale s'étend en forme d'arc.

5. Unité de bouteille (2) selon l'une quelconque des revendications 1 à 4 dans laquelle
une longueur (L1) dans la direction longitudinale de la voie d'écoulement (16) est comprise entre 3,0 et 15,0 mm, et
une largeur (W1) dans une direction orthogonale à la direction longitudinale de la voie d'écoulement (16) est comprise entre 0,3 et 1,0 mm.

6. Unité de bouteille (2) selon l'une quelconque des revendications 1 à 5 dans laquelle
la chambre de mélange (8) comporte un surface supérieure (8a) qui est situé sur un côté supérieur lorsqu'il est utilisé et une surface de plancher (8b) qui est située sur un côté inférieur lorsqu'il est utilisé, et
la seconde entrée (10) est fournie dans la surface supérieure (8a).

7. Unité de bouteille (2) selon la revendication 6, dans laquelle la voie d'écoulement (32, 42, 52) comporte une première partie (32a, 42a, 52a) qui est ouverte au niveau de la chambre de mélange (8) avec une première section transversale de voie d'écoulement (S1), une seconde partie (32b, 42b, 52b) qui est au-dessus de la première partie (32a, 42a, 52a) et a une seconde surface de section transversale de voie d'écoulement (S2) plus grande que la première surface de section transversale de voie d'écoulement (S1), et une partie étagée (32c, 42c, 52c) qui se trouve entre la première partie (32a, 42a, 52a) et la seconde partie (32b, 42b, 52b) et qui modifie de façon discontinue une section transversale de chemin d'écoulement de celle-ci.

8. Unité de bouteille (2) selon l'une quelconque des revendications 1 à 6, dans laquelle le trajet d'écoulement (16) s'étend avec une surface transversale de trajet d'écoulement constante sur une région entière de celui-ci.

9. Kit de réparation de crevaison (1) comprenant :
l'unité de bouteille (2) selon l'une quelconque revendication précédente, et
un compresseur (3) pour alimenter l'air comprimé (A).
